Europäisches Patentamt

(19) European Patent Office

Office européen des brevets

(11) Publication number: **0 124 321**
**B1**

(12) **EUROPEAN PATENT SPECIFICATION**

(45) Date of publication of the patent specification:
12.03.86

(21) Application number: **84302631.1**

(22) Date of filing: **18.04.84**

(51) Int. Cl.⁴: **B 65 G 43/02**

(54) **A safety system for a conveyor.**

(30) Priority: **26.04.83 GB 8311250**

(43) Date of publication of application:
**07.11.84 Bulletin 84/45**

(45) Publication of the grant of the patent:
**12.03.86 Bulletin 86/11**

(84) Designated Contracting States:
**AT BE CH DE FR GB IT LI LU NL SE**

(56) References cited:
**DE - A - 3 131 963**
**GB - A - 1 144 187**
**GB - A - 2 107 268**

(73) Proprietor: **J.H. FENNER & CO. LIMITED, Marfleet, Hull North Humberside, HU9 5RA (GB)**

(72) Inventor: **Sargeant, Micheal Gary, 59 Thoresby Street Princess Avenue, Hull North Humberside HU5 3RA (GB)**

(74) Representative: **Ranson, Arthur Terence et al, W.P. Thompson & Co. Coopers Building Church Street, Liverpool L1 3AB (GB)**

ACTORUM AG

## Description

The present invention relates to a safety system for conveyors and has particular application to belt conveyors employing idler rollers. More particularly, the invention relates to a method and apparatus for detecting faulty bearings, idlers or rollers of an endless belt conveyor support.

Our co-pending U.K. Patent application No. 2107268 describes a system and method for detecting faulty bearings of rollers supporting an endless belt conveyor. In that application an infra-red sensor is positioned to scan the belt surface so as to monitor its temperature and thereby give a warning when the belt temperature rises above the ambient temperature, whereupon the conveyor is stopped to allow the belt to heat up locally in the regions of the faulty bearing or bearings and then conveyor restarted, and the sensor used to detect hot spots on the belt which indicate the location of any faulty bearings.

With the described system and method it has been found that the sensor sensitivity is such as to pick up all hot spots on the belt surface and not only those corresponding to the position of faulty bearings. For example, hot spots may arise from internal chafing of the yarns due to flexion. In fact a large number of spurious hot spots mainly of a random nature arise on the belt. This makes it difficult to locate exactly the location of the faulty bearing or bearings.

It is an aim of the present invention to provide an improved system and method for detecting faulty bearings which locates the faulty bearings more reliably and which can distinguish true hot spots caused by a faulty bearing from random hot spots.

According to one aspect of the present invention there is provided a method of detecting faulty bearings, idlers or rollers of an endless conveyor support comprising the steps of:

a) locating an infra-red radiation sensor adjacent the surface of the conveyor in a position to sense the temperature of the conveyor surface;

b) stopping the conveyor for a period of time to allow localised heating of the belt in the region of any faulty bearing, idler or roller;

c) restarting the conveyor and moving it for one lap or run at a known or calculable velocity;

d) sensing changes in temperature of the conveyor using the sensor and storing data indicative of the position of any hot spots, and

e) repeating, at least once, steps b, c and d, and comparing the stored data from the sucessive laps or runs thereby to eliminate any random hot spots, and thereafter calculating the position of any faulty bearing, idler or roller.

According to another aspect of the invention there is provided a system for detecting faulty bearings, idlers or rollers of an endless conveyor support comprising at least one infra-red radiation sensor positioned, in use, adjacent the conveyor to sense the temperature of the conveyor surface and identify hot spots on the conveyor surface, means for storing data indicative of the position of the hot spot(s) identified on one lap or run of the conveyor, and means for comparing the data stored on successive runs thereby to differentiate between true hot spots and random hot spots.

Preferably, three infra-red radiation sensors are provided. One is used with a chopper mechanism to measure the ambient temperature of the belt and trigger an alarm upon the belt reaching a predetermined temperature. The other two are located adjacent the belt and are spaced apart a known distance one behind the other in the direction of belt/conveyor movement. By measuring the time for a hot spot to pass between the two sensors, the velocity of the conveyor can be calculated.

The present invention will now be described further hereinafter by way of example only.

Endless conveyors, in particular belt conveyors, are widely employed in industry for transporting goods or material. The endless belt is supported on idlers or rollers which are journalled for rotation in bearings. When the friction in the bearing increases due to lack of lubrication or impending seizure, heat is generated which is transmitted to the idler or roller and thus to the belt. In order to detect such incidents the invention provides an infra-red radiation sensor which is mounted adjacent to the belt surface for measuring the temperature thereof or, more particularly, for detecting changes in temperature such as localised hot spots. Two infra-red sensors may be provided spaced apart a known distance one behind the other in the direction of conveyor movement. The or each sensor is connected to signal conditioning electronics which output into a micro-processor having an associated memory. A micro-processor interface is interposed between the micro-processor and the output from the sensor signal conditioning electronics.

A further infra-red radiation sensor may be provided for measuring the temperature of the belt relative to the ambient temperature of a reference. For example, a shutter mechanism may be interposed between the radiation sensor and the belt such that when the shutter is open the sensor measures the belt temperature and when closed it measures the temperature of the shutter corresponding to the ambient temperature. By means of associated electronics an alarm can be triggered when a predetermined temperature difference is noted. The operation then instigates the procedure for detecting the location of any fault giving rise to a hot spot.

The conveyor is first stopped for a period of time, for example 30 s, so that the "hot" roller transmits its heat to the belt. The conveyor is then restarted with micro-processor and associated sensors operational. The internal clock of the micro-processor commences to count from the start of the conveyor and each time a hot spot is detected by the sensor, the time of detection is stored in the memory. The conveyor is operated for one lap or run and then stopped. The conveyor is either moved at a known speed or the speed is calculated for example by the method described further herein below.

The conveyor remains stationary for another period of say 30 s whereupon a further run is commenced and a further set of readings taken which are likewise stored in the memory. Because the idlers are fixed in space, the time from the start of a belt run to the detection of a hot spot from a seized idler or idlers is constant from one run to another. The hot spots detected on two or more successive runs can then be compared and those varying in time from the start of a belt run which are attributable to random factors can be eliminated, thus only those hot spots generated by seized idlers should show a correlation and their time of occurrances from the start of the belt run. Knowing these times and the velocity of the belt it is possible to derive the position of the seized idler.

The velocity of the belt may be calculated by measuring the time for a hot spot to pass between the two spaced apart sensors. Thus, the velocity can be monitored during the conveyor run at the same time as sensor readings are being taken.

## Claims

1. A method of detecting faulty bearings, idlers or rollers of an endless conveyor support comprising:

a) locating an infra-red radiation sensor adjacent the surface of the conveyor in a position to sense the temperature of the conveyor surface, and characterised by the steps of:

b) stopping the conveyor for a period of time to allow localised heating of the belt in the region of any faulty bearing, idler or roller;

c) restarting the conveyor and moving it for one lap or run at a known or calculable velocity;

d) sensing changes in temperature of the conveyor using the sensor and storing data indicative of the position of any hot spots, and

e) repeating, at least once, steps b, c and d, and comparing the stored data from the successive laps or runs thereby to eliminate any random hot spots, and thereafter calculating the position of any faulty bearing, idler or roller.

2. A method as claimed in Claim 1 in which the data stored indicative of the position of any hot spots is a time corresponding to time elapsed from the start-up time of the conveyor to the point at which the hot spot is detected.

3. A system for detecting faulty bearings, idlers or rollers of an endless conveyor support comprising at least one infra-red radiation sensor positioned, in use, adjacent the conveyor to sense the temperature of the conveyor surface and identify hot spots on the conveyor surface characterised by means for storing data indicative of the position of the hot spots identified on one lap or run of the conveyor, and means for comparing the data stored on successive runs thereby to distinguish between true hot spots and random hot spots.

4. A system as claimed in Claim 3 in which three infra-red radiation sensors are provided.

5. A system as claimed in any one of Claims 3 or 4 further comprising a chopper circuit for use in connection with said or one of the infra-red radiation sensors to measure the ambient temperature of the conveyor surface, and an alarm which is triggered when the conveyor surface reaches a predetermined ambient temperature.

6. A system as claimed in any one of Claims 3, 4 or 5 in which two radiation sensors are located adjacent the conveyor surface and spaced a known distance apart one behind the other in the direction of conveyor movement and are employed to calculate the velocity of the belt by measuring the time for a hot spot to pass therebetween.

7. A system as claimed in any of Claims 3 to 6 in which the means for storing data and the means for comparing data stored is a micro-processor with associated memory.

8. A system as claimed in Claim 5 in which the chopper circuit comprises an openable and closable shutter mechanism interposed between the radiation sensor and the conveyor surface.

## Revendications

1. Procédé de détection des paliers, guides ou galets défectueux d'un support de convoyeur sans fin comprenant:

a) le positionnement d'un détecteur de rayonnement infrarouge de manière adjacente à la surface du convoyeur à un endroit adapté à la détection de la température de la surface du convoyeur, et caractérisé par les phases de:

b) arrêt du convoyeur pendant une période permettant de localiser l'échauffement de la bande dans la région de tout palier, guide ou galet défectueux;

c) redémarrage du convoyeur et son déplacement pendant une avance ou une course à une vitesse calculable ou connue;

d) détection des variations de température du convoyeur en utilisant le détecteur et emmagasinage des données indicatrices de la position de tous les points chauds, et

e) répétition, au moins une fois, des phases b, c et d, et comparaison des données emmagasinées des avances ou courses successives pour tous les points chauds aléatoires, et de là, calcul de l'emplacement de tout palier, guide ou galet défectueux.

2. Procédé selon la revendication 1, dans lequel les données emmagasinées indicatrices de l'emplacement de tous les points chauds sont un temps correspondant au temps écoulé depuis le moment de démarrage du convoyeur jusqu'au moment auquel le point chaud est détecté.

3. Système de détection des paliers, guides ou galets défectueux d'un support de convoyeur sans fin comprenant au moins un détecteur de rayonnement infrarouge positionné, en utilisation, adjacent au convoyeur pour détecter la température de la surface du convoyeur et identifier les points chauds de la surface du convoyeur, caractérisé par des moyens pour emmagasiner les données indicatrices de la position des points chauds identifiés sur une avance ou course du convoyeur, et des moyens pour comparer les données emmagasinées lors des courses successives pour différencier les véritables points chauds et les points chauds aléatoires.

4. Système selon la revendication 3, dans lequel sont prévus trois détecteurs de rayonnement infrarouge.

5. Système selon l'une des revendications 3 ou 4, comportant également un circuit interrupteur adapté à être utilisé en liaison avec ledit ou l'un des détecteurs de rayonnement infrarouge pour mesurer la température ambiante de la surface du convoyeur, et une alarme qui est déclenchée quand la surface du convoyeur atteint une température ambiante prédéterminée.

6. Système selon l'une des revendications 3, 4 ou 5, dans lequel deux détecteurs de rayonnement sont disposés adjacents à la surface du convoyeur et espacés l'un de l'autre d'une distance connue l'un derrière l'autre dans la direction du mouvement du convoyeur et sont employés à calculer la vitesse de la bande en mesurant le temps mis par un point chaud pour passer entre eux.

7. Système selon l'une des revendications 3 à 6, dans lequel les moyens pour emmagasiner les données et les moyens pour comparer les données emmagasinées sont un microprocesseur ayant une mémoire associée.

8. Système selon la revendication 5, dans lequel le circuit interrupteur comporte un mécanisme à volet, susceptible d'être ouvert et fermé, interposé entre le détecteur de rayonnement et la surface du convoyeur.

## Patentansprüche

1. Verfahren zum Ermitteln schadhafter Lager, Laufrollen oder Walzen der Trageinrichtung eines Endlos-Gurtförderers unter

a) Anordnen eines Infrarotstrahlungs-Sensors benachbart der Oberfläche des Förderers in einer Stellung für das Abfühlen der Temperatur der Förderer-Oberfläche, gekennzeichnet durch folgende Schritte:

b) Anhalten des Förderers für einen Zeitraum, um das Lokalisieren der Erhitzung des Gurtes im Bereich eines schadhaften Lagers, einer Laufrolle oder Walze zu ermöglichen;

c) Wiederanfahren des Förderers und Bewegen über eine Runde oder einen Umlauf mit einer bekannten oder berechenbaren Geschwindigkeit;

d) Abfühlen von Veränderungen der Temperatur des Förderers mit Hilfe des Sensors und Speichern von für die Position eines heissen Flecks massgeblichen Daten, und

e) wenigstens einmalige Wiederholung der Schritte b, c und d und Vergleichen der gespeicherten Daten der aufeinanderfolgenden Runden oder Umläufe und dadurch Ausscheiden zufälliger heisser Flecken und darnach Berechnung der Position eines schadhaften Lagers, einer Laufrolle oder Walze.

2. Verfahren nach Anspruch 1, bei welchem die gespeicherten, für die Position eines heissen Flecks massgeblichen Daten eine Zeit ist, die jener Zeit entspricht, welche vom Startzeitpunkt bis zu dem Punkt verstreicht, an welchem der heisse Fleck ermittelt wird.

3. System für das Ermitteln von schadhaften Lagern, Laufrollen oder Walzen der Trageinrichtung eines Endlos-Gurtförderers, mit wenigstens einem Infrarotstrahlungs-Sensor der — im Betrieb — benachbart dem Förderer angeordnet ist, um die Temperatur der Oberfläche des Förderers abzufühlen und heisse Flecken auf der Oberfläche des Förderers festzustellen, gekennzeichnet durch Mittel für das Speichern von für die Position der heissen Flecken massgeblichen Daten während einer Runde oder eines Umlaufs des Förderers und Mittel für das Vergleichen der während aufeinanderfolgender Umläufe gespeicherten Daten und dadurch Unterscheiden zwischen wirklichen und zufälligen heissen Flecken.

4. System nach Anspruch 3, in welchem drei Infrarotstrahlungs-Sensoren vorgesehen sind.

5. System nach einem der Ansprüche 3 oder 4, welches weiters eine Unterbrecherschaltung aufweist für den Betrieb in Verbindung mit dem oder einem der Infrarotstrahlungs-Sensoren für das Messen der Umgebungstemperatur der Förderer-Oberfläche sowie einen Alarm, der ausgelöst wird, wenn die Förderer-Oberfläche eine vorbestimmte Umgebungstemperatur erreicht.

6. System nach einem der Ansprüche 3, 4 oder 5, in welchem zwei Infrarotstrahlungs-Sensoren benachbart der Förderer-Oberfläche in Bewegungsrichtung des Förderers mit einem bekannten Abstand hintereinander angeordnet sind und für die Berechnung der Gurtgeschwindigkeit durch Messen der Zeit, in welcher ein heisser Fleck zwischen den beiden Sensoren durchläuft, in Verwendung sind.

7. System nach einem der Ansprüche 3 bis 6, in welchem die Mittel für das Speichern der Daten und die Mittel für das Vergleichen der gespeicherten Daten aus einem Mikroprozessor mit angeschlossenem Speicher bestehen.

8. System nach Anspruch 5, in welchem die Unterbrecherschaltung einen aufmachbaren und schliessbaren Klappenmechanismus aufweist, der zwischen dem Strahlungs-Sensor und der Förde-rer-Oberfläche angeordnet ist.